# FASCICULE DE BREVET EUROPEEN

(11) **EP 3 007 865 B1**
(45) Date de publication et mention de la délivrance du brevet: **08.11.2017**
(21) Numéro de dépôt: 14725495.7
(22) Date de dépôt: 22.05.2014
(51) Int. Cl.: B25D 17/11, B25D 9/26, E02F 3/96, E02F 9/22, E04G 23/08

(54) **PROCÉDÉ DE COMMANDE D'UN PARAMÈTRE D'ALIMENTATION D'UN APPAREIL À PERCUSSIONS**
VERFAHREN ZUR STEUERUNG EINES STROMVERSORGUNGSPARAMETERS EINES SCHLAGWERKZEUGES
METHOD FOR CONTROLLING A PERCUSSION TOOL POWER SUPPLY PARAMETER

(30) Priorité: 12.06.2013 FR 1355417
(43) Date de publication de la demande: 20.04.2016
(73) Titulaire: Montabert, 69800 Saint Priest (FR)
(72) Inventeur: COMARMOND, Jean-Sylvain, 69390 Vourles (FR)
(74) Mandataire: Verriest, Philippe
(86) Numéro de dépôt international: PCT/EP2014/060573
(87) Numéro de publication internationale: WO 2014/198515

(56) Documents cités:
- EP-A1- 0 486 898
- WO-A1-2005/033468
- WO-A2-2005/094163
- FR-A1- 2 719 385
- US-A1- 2001 020 218

## Description

La présente invention concerne un procédé de commande d'un paramètre d'alimentation d'un appareil à percussions mû par un fluide incompressible sous pression, et un ensemble pour la mise en oeuvre de ce procédé.

Un appareil à percussions, dit brise-roche hydraulique, est couramment utilisé pour diverses applications, telles que le cassage de blocs en carrière, les travaux de démolition ou encore le creusement de tranchées. Un brise-roche hydraulique comporte notamment un piston de frappe agencé pour percuter cycliquement un outil de façon à produire une énergie d'impact sur le matériau à démolir. Lors de l'utilisation d'un brise-roche, celui-ci génère un bruit de fonctionnement important qui se propage dans l'environnement immédiat du brise-roche sous la forme d'ondes sonores susceptibles d'induire des nuisances sonores pour des personnes situées à proximité du brise-roche.

Afin de limiter l'impact de ces nuisances sonores, l'utilisation d'un brise-roche peut être limitée, voire interdite, en-deçà d'une distance minimum autour de zones sensibles, c'est-à-dire des zones habitées ou occupées par des tiers, telles que des zones d'habitation, des zones d'activités industrielles, commerciales ou agricoles, ou encore des zones d'enseignement, de soins ou de repos.

En outre, le choix d'un modèle de brise-roche peut être conditionné par le type de travaux à effectuer. Par exemple, lorsque des travaux doivent être réalisés à proximité de zones sensibles, il peut être nécessaire de sélectionner un brise-roche de faible puissance pour limiter les nuisances sonores.

Ces nuisances sonores peuvent être très variables, particulièrement en milieu urbanisé, en raison de la variabilité du terrain, donc des coefficients d'absorption des matériaux, et de la configuration du site avec les réflexions possibles des ondes sonores sur les bâtiments ou les structures avoisinants. Il en résulte qu'il est très difficile de prédire les niveaux sonores perçus dans une zone prédéterminée située à proximité du brise-roche.

Dans ces conditions, la variabilité de ces nuisances sonores rend l'utilisation de brise-roches particulièrement délicate. Pour pallier ce problème, il est courant qu'un maitre d'oeuvre se voit imposer l'utilisation d'un brise-roches de très faible puissance, la vitesse d'exécution des travaux est alors lente, et les coûts des travaux deviennent importants.

Pour pallier cet inconvénient, il est connu d'enregistrer, pendant toute la durée des travaux réalisés à proximité de zones sensibles, les niveaux sonores des ondes sonores se propageant à proximité de ces zones sensibles, grâce à l'utilisation d'un système de détection comprenant notamment un ou plusieurs microphones et un enregistreur agencé pour vérifier les niveaux sonores mesurés par le ou les microphones.

Ainsi, l'opérateur du brise-roche peut être informé de la nuisance sonore qu'il a occasionnée sur l'environnement, et il peut si nécessaire remplacer le brise-roche utilisé par un modèle de brise-roches de plus faible puissance.

Dans tous les cas, l'utilisation d'un brise-roches à proximité de zones sensibles reste sujette à erreur humaine, et il est fréquent que les niveaux sonores maximum acceptables soient dépassés.

Le document WO2005/033468 divulgue un procédé comparant les vibrations émises par une colonne de forage à un profil de vibrations connu afin de détecter le desserrage des raccords filetés de la colonne.

La présente invention vise à remédier à ces inconvénients.

Le problème technique à la base de l'invention consiste donc à fournir un procédé de commande et un ensemble pour sa mise en oeuvre, permettant de limiter les nuisances sonores générées lors de la réalisation de travaux à l'aide d'un appareil à percussions, en dessous d'une valeur maximale autorisée.

A cet effet, la présente invention concerne un procédé de commande d'un paramètre d'alimentation d'un appareil à percussions mû par un fluide incompressible sous pression selon la revendication 1. Ainsi, le procédé de commande selon l'invention permet de régler automatiquement, via l'unité de commande et le dispositif de pilotage, un paramètre d'alimentation, tel que le débit d'alimentation ou la pression d'alimentation, de l'appareil à percussions en fonction des données sonores mesurées à proximité de la zone prédéterminée. Ces dispositions permettent d'optimiser le fonctionnement de l'appareil à percussions, tout en évitant que les niveaux sonores des ondes sonores engendrées par l'appareil à percussions et se propageant à proximité de zones sensibles ne dépassent la valeur de seuil prédéterminée.

Selon un mode de mise en oeuvre du procédé de commande, la zone prédéterminée est une zone habitée ou occupée par des tiers, telle qu'une zone d'habitation, une zone d'activités industrielles, commerciales ou agricoles, ou encore une zone d'enseignement, de soins ou de repos.

Selon un mode de mise en oeuvre de l'invention, la zone prédéterminée est déportée par rapport à l'appareil à percussions.

Selon un mode de mise en oeuvre du procédé de commande, la consigne de commande est corrigée de telle sorte que le paramètre d'alimentation réglé par le dispositif de pilotage induise des données sonores, avantageusement à proximité de la zone prédéterminée, inférieures à la valeur de seuil prédéterminée.

Selon un mode de mise en oeuvre du procédé de commande, la consigne de commande est corrigée en tenant compte de la valeur de seuil prédéterminée.

Selon un mode de mise en oeuvre du procédé de commande, ce dernier comprend une étape consistant à répéter de manière itérative les étapes de mesure, de transmission, de comparaison, de correction et d'application.

Selon un mode de mise en oeuvre du procédé de commande, ce dernier comprend une étape consistant à régler, notamment par une entrée opérateur, la valeur de seuil prédéterminée. Ces dispositions permettent d'adapter la valeur de seuil prédéterminée en fonction de la zone prédéterminée à protéger.

Selon un mode de mise en oeuvre du procédé de commande, si l'au moins une donnée sonore reçue est supérieure à la valeur de seuil prédéterminée, l'étape de correction consiste à corriger la consigne de commande du dispositif de pilotage de manière à diminuer le paramètre d'alimentation de l'appareil à percussions.

Selon un mode de mise en oeuvre du procédé de commande, si l'au moins une donnée sonore reçue est inférieure à la valeur de seuil prédéterminée, l'étape de correction consiste à corriger la consigne de commande du dispositif de pilotage de manière à augmenter le paramètre d'alimentation de l'appareil à percussions.

Selon un mode de mise en oeuvre du procédé de commande, si l'au moins une donnée sonore reçue est inférieure à la valeur de seuil prédéterminée et si la différence entre l'au moins une donnée sonore reçue et la valeur de seuil prédéterminée est supérieure à une valeur limite prédéterminée, l'étape de correction consiste à corriger la consigne de commande du dispositif de pilotage de manière à augmenter le paramètre d'alimentation de l'appareil à percussions.

Selon un mode de mise en oeuvre du procédé de commande, si l'au moins une donnée sonore reçue est inférieure à la valeur de seuil prédéterminée et si la différence entre l'au moins une donnée sonore reçue et la valeur de seuil prédéterminée est inférieure à la valeur limite prédéterminée, l'étape de correction consiste à maintenir la valeur de la consigne de commande préalablement appliquée.

Selon un mode de mise en oeuvre, le procédé de commande comprend une étape consistant à interrompre l'alimentation de l'appareil à percussions en fluide incompressible sous pression lorsque l'au moins une donnée sonore reçue par l'unité de commande est supérieure à la valeur de seuil prédéterminée et lorsque simultanément le paramètre d'alimentation de l'appareil à percussions est réglé à son minimum par le dispositif de pilotage. Ces dispositions permettent d'interrompre automatiquement l'alimentation en fluide incompressible sous pression de l'appareil à percussions de manière à protéger la zone prédéterminée des ondes sonores produites par l'appareil à percussions. Dans un tel cas, l'opérateur devra par exemple éloigner l'appareil à percussions de la zone prédéterminée avant de remettre en marche ledit appareil à percussions.

Selon un mode de mise en oeuvre de l'invention, l'étape de mesure consiste à mesurer le niveau sonore des ondes sonores se propageant à proximité de la zone prédéterminée.

Selon un mode de mise en oeuvre du procédé de commande, ce dernier comprend une étape consistant à disposer des moyens de mesure de données sonores à proximité de la zone prédéterminée.

Selon un mode de mise en oeuvre de l'invention, l'étape de mesure est réalisée avec un ou plusieurs microphones disposés à proximité de la zone prédéterminée.

Selon un mode de mise en oeuvre, le dispositif de pilotage est agencé pour régler, par exemple par paliers ou de manière continue, le paramètre d'alimentation de l'appareil à percussions entre une valeur minimale et une valeur maximale. Selon un mode de mise en oeuvre, le dispositif de pilotage est agencé pour régler le paramètre d'alimentation de l'appareil à percussions dans différentes valeurs comprises entre les valeurs minimale et maximale.

Selon un mode de mise en oeuvre, le procédé de commande comprend une étape consistant à déplacer un organe de pilotage que comporte le dispositif de pilotage entre une première position de pilotage correspondant à une valeur maximale du paramètre d'alimentation et une deuxième position de pilotage correspondant à une valeur minimale du paramètre d'alimentation.

Selon un mode de mise en oeuvre du procédé de commande, la consigne de commande appliquée initialement au dispositif de pilotage, c'est-à-dire à la mise en marche de l'appareil à percussions, est déterminée de manière à régler le paramètre d'alimentation à une valeur minimale.

Selon un mode de mise en oeuvre du procédé de commande, l'étape de déplacement de l'organe de pilotage est réalisée de manière continue ou par paliers.

Selon un mode de mise en oeuvre du procédé de commande, ce dernier comprend une étape consistant à déterminer la zone prédéterminée et à disposer des moyens de mesure de données sonores à proximité de la zone prédéterminée.

La présente invention concerne en outre un ensemble selon la revendication 7. Selon un mode de réalisation de l'invention, la zone prédéterminée est une zone habitée ou occupée par des tiers, telle qu'une zone d'habitation, une zone d'activités industrielles, commerciales ou agricoles, ou encore une zone d'enseignement, de soins ou de repos.

Selon un mode de réalisation de l'invention, l'unité de commande est agencée pour corriger la consigne de commande de telle sorte que le paramètre d'alimentation réglé par le dispositif de pilotage induise des données sonores, avantageusement à proximité de la zone prédéterminée, inférieures à la valeur de seuil prédéterminée

Selon un mode de réalisation de l'invention, lorsque les données sonores reçues par l'unité de commande sont supérieures à la valeur de seuil prédéterminée, l'unité de commande est agencée pour corriger la consigne de commande du dispositif de pilotage de manière à diminuer le paramètre d'alimentation.

Selon un mode de réalisation de l'invention, lorsque les données sonores reçues par l'unité de commande sont inférieures à la valeur de seuil prédéterminée, l'unité de commande est agencée pour corriger la consigne de commande du dispositif de pilotage de manière à augmenter le paramètre d'alimentation.

Selon un mode de réalisation de l'invention, lorsque les données sonores reçues par l'unité de commande sont inférieures à la valeur de seuil prédéterminée et lorsque simultanément la différence entre les données sonores reçues et la valeur de seuil prédéterminée est supérieure à une valeur limite prédéterminée, l'unité de commande est agencée pour corriger la consigne de commande du dispositif de pilotage de manière à augmenter le paramètre d'alimentation.

Selon un mode de réalisation de l'invention, l'ensemble comprend un circuit d'alimentation haute pression destiné à alimenter l'appareil à percussions en fluide incompressible sous pression, et un circuit de retour basse pression.

Selon un mode de réalisation de l'invention, l'appareil à percussions comprend un corps délimitant un cylindre dans lequel est monté déplaçable de façon alternative le piston de frappe.

Par exemple, le piston de frappe et le cylindre délimitent au moins une chambre basse reliée en permanence au circuit d'alimentation haute pression et une chambre haute mise en relation alternativement avec le circuit d'alimentation haute pression et le circuit de retour basse pression.

Selon une caractéristique de l'invention, l'unité de commande est agencée pour commander l'interruption de l'alimentation de l'appareil à percussions en fluide incompressible sous pression lorsque les données sonores reçues par l'unité de commande sont supérieures à la valeur de seuil prédéterminée et lorsque simultanément le paramètre d'alimentation est réglé à son minimum par le dispositif de pilotage.

Selon un mode de réalisation de l'invention, l'ensemble comprend un dispositif d'obturation agencé pour obturer le circuit d'alimentation haute pression.

Selon un mode de réalisation de l'invention, le dispositif d'obturation est monté sur le circuit d'alimentation haute pression.

Selon un mode de réalisation de l'invention, le dispositif d'obturation comprend un organe d'obturation déplaçable entre une position d'obturation dans laquelle ledit organe d'obturation obture le circuit d'alimentation haute pression, et une position de libération dans laquelle ledit organe d'obturation libère le circuit d'alimentation haute pression.

Selon un mode de réalisation de l'invention, l'unité de commande est agencée pour commander le déplacement de l'organe d'obturation entre ses positions d'obturation et de libération.

Selon un mode de réalisation de l'invention, le dispositif d'obturation comprend un élément d'actionnement agencé pour déplacer l'organe d'obturation entre ses positions d'obturation et de libération.

Selon un mode de réalisation de l'invention, l'élément d'actionnement est agencé pour recevoir une consigne de contrôle provenant de l'unité de commande, et pour déplacer l'organe d'obturation en fonction de la consigne de contrôle.

Selon un mode de réalisation de l'invention, le dispositif d'obturation est une électrovanne, et par exemple une électrovanne tout ou rien, telle qu'une électrovanne normalement ouverte, ou une électrovanne normalement fermée.

Selon un mode de réalisation de l'invention, les moyens de mesure sont agencés pour mesurer les niveaux sonores des ondes sonores se propageant à proximité de la zone prédéterminée.

Selon une caractéristique de l'invention, les moyens de mesure comportent un ou plusieurs microphones destinés à être disposés à proximité de la zone prédéterminée.

Selon une caractéristique de l'invention, le dispositif de pilotage comprend un organe de pilotage déplaçable entre une première position de pilotage correspondant à une valeur maximale du paramètre d'alimentation et une deuxième position de pilotage correspondant à une valeur minimale du paramètre d'alimentation.

Selon un mode de réalisation de l'invention, le dispositif de pilotage est externe à l'appareil à percussions.

Selon un mode de réalisation de l'invention, le dispositif de pilotage est hydraulique.

Selon un mode de réalisation de l'invention, l'unité de commande est agencée pour commander le déplacement de l'organe de pilotage entre ses première et deuxième positions, et par exemple de manière continue ou par paliers.

Selon un mode de réalisation de l'invention, le dispositif de pilotage est pourvu d'un organe d'actionnement agencé pour déplacer l'organe de pilotage entre ses première et deuxième positions de pilotage.

Selon un mode de réalisation de l'invention, l'organe d'actionnement est agencé pour recevoir la consigne de commande corrigée provenant de l'unité de commande, et pour déplacer l'organe de pilotage en fonction de la consigne de commande corrigée.

Selon un mode de réalisation de l'invention, le dispositif de pilotage comprend un régulateur de pression, et par exemple un régulateur de pression à commande proportionnelle.

Selon un mode de réalisation de l'invention, le dispositif de pilotage est monté sur le circuit d'alimentation haute pression.

Selon une caractéristique de l'invention, le dispositif de pilotage est agencé pour régler la pression d'alimentation, également appelée pression de fonctionnement, de l'appareil à percussions entre une pression d'alimentation minimale et une pression d'alimentation maximale.

Selon un mode de réalisation de l'invention, le dispositif de pilotage est agencé pour régler de manière continue ou par paliers la pression d'alimentation de l'appareil à percussions entre les pressions d'alimentation minimale et maximale.

Selon un mode de réalisation de l'invention, l'unité de commande est agencée pour corriger la consigne de commande du dispositif de pilotage de manière à diminuer la pression d'alimentation de l'appareil à percussions lorsque les données sonores reçues par l'unité de commande sont supérieures à la valeur de seuil prédéterminée.

Selon un mode de réalisation de l'invention, l'unité de commande est agencée pour corriger la consigne de commande du dispositif de pilotage de manière à augmenter la pression d'alimentation de l'appareil à percussions lorsque les données sonores reçues par l'unité de commande sont inférieures à la valeur de seuil prédéterminée.

Selon un mode de réalisation de l'invention, le dispositif de pilotage comprend un régulateur de débit, et par exemple un régulateur de débit à commande proportionnelle.

Selon un mode de réalisation de l'invention, le dispositif de pilotage est agencé pour régler le débit d'alimentation de l'appareil à percussions entre un débit d'alimentation minimal et un débit d'alimentation maximal.

Selon un mode de réalisation de l'invention, le dispositif de pilotage est agencé pour régler de manière continue ou par paliers le débit d'alimentation de l'appareil à percussions entre les débits d'alimentation minimal et maximal.

Selon un mode de réalisation de l'invention, l'unité de commande est agencée pour corriger la consigne de commande du dispositif de pilotage de manière à diminuer le débit d'alimentation de l'appareil à percussions lorsque les données sonores reçues par l'unité de commande sont supérieures à la valeur de seuil prédéterminée.

Selon un mode de réalisation de l'invention, l'unité de commande est agencée pour corriger la consigne de commande du dispositif de pilotage de manière à augmenter le débit d'alimentation de l'appareil à percussions lorsque les données sonores reçues par l'unité de commande sont inférieures à la valeur de seuil prédéterminée.

Selon un mode de réalisation de l'invention, l'ensemble comprend une pompe d'alimentation à cylindrée variable reliée au circuit d'alimentation haute pression, et le dispositif de pilotage est agencé pour régler la cylindrée de la pompe d'alimentation entre une cylindrée minimale et une cylindrée maximale.

Selon un mode de réalisation de l'invention, l'unité de commande et l'appareil à percussions sont destinés à être montés sur un engin porteur, tel qu'une pelle hydraulique.

Selon un mode de réalisation de l'invention, l'ensemble comprend des moyens de réglage agencés pour régler, notamment par une entrée opérateur, la valeur de seuil prédéterminée.

Selon un mode de réalisation de l'invention, l'unité de commande comporte un récepteur agencé pour recevoir les données sonores transmises par les moyens de transmission.

De toute façon, l'invention sera bien comprise à l'aide de la description qui suit en référence au dessin schématique annexé représentant, à titre d'exemples non limitatifs, trois formes d'exécution de cet ensemble.
Figure 1 est une vue schématique d'un ensemble selon un premier mode de réalisation de l'invention.
Figure 2 est une vue schématique d'un ensemble selon un deuxième mode de réalisation de l'invention.
Figure 3 est une vue schématique d'un ensemble selon un troisième mode de réalisation de l'invention.
Figure 4 est une vue schématique d'un ensemble selon un quatrième mode de réalisation de l'invention.

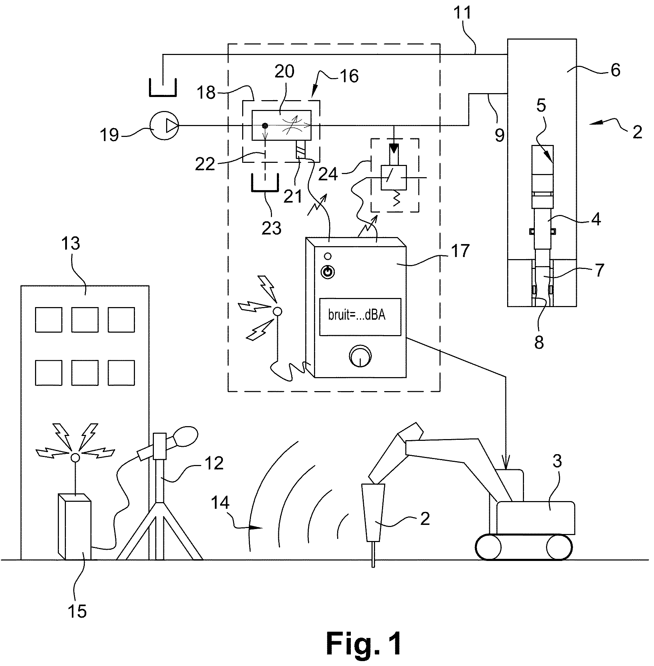

La figure 1 représente un ensemble selon un premier mode de réalisation de l'invention comprenant un appareil à percussions 2, tel qu'un brise-roche hydraulique, monté sur un engin porteur 3, tel qu'une pelle hydraulique.

L'appareil à percussions 2 comprend un piston de frappe 4 étagé monté coulissant de façon alternative à l'intérieur d'un cylindre 5 ménagé dans un corps 6 de l'appareil à percussions 2. Au cours de chaque cycle de fonctionnement de l'appareil à percussions 2, le piston de frappe 4 vient percuter l'extrémité supérieure d'un outil 7 monté coulissant dans un alésage 8 ménagé dans le corps 3 coaxialement au cylindre 5. Le piston de frappe 4 et le cylindre 5 délimitent par exemple une chambre basse (non représentée sur les figures) reliée fluidiquement en permanence à un circuit d'alimentation haute pression 9 destiné à alimenter l'appareil à percussions 2 en fluide incompressible sous pression, et une chambre haute (non représentée sur les figures) de section plus importante ménagée au dessus du piston de frappe 4.

L'appareil à percussions 2 comprend en outre un distributeur (non représentée sur les figures) monté dans le corps 6 et agencé pour mettre la chambre haute alternativement en relation avec le circuit d'alimentation haute pression 9, lors de la course de frappe du piston de frappe 4, et avec un circuit de retour basse pression 11 lors de la course de remontée du piston de frappe 4.

L'ensemble comprend en outre au moins un microphone 12 destiné à être disposé à proximité d'une zone à protéger 13, telle qu'un bâtiment habité ou occupé par des tiers, de manière à mesurer des données sonores, telles que le niveau sonore, relatives à des ondes sonores 14 se propageant à proximité de la zone 13 et engendrées par le fonctionnement de l'appareil à percussions 2. Selon un mode de réalisation de l'invention, l'ensemble pourrait comprendre plusieurs microphones 12.

L'ensemble comprend également un émetteur 15 relié au microphone 12, et agencé pour transmettre les données sonores mesurées par le microphone 12. L'émetteur 15 est de préférence disposés à proximité du microphone 12, et donc de la zone à protéger 13.

L'ensemble comprend de plus un dispositif de pilotage 16 externe à l'appareil à percussions 2 et agencé pour régler le débit d'alimentation de l'appareil à percussions 2, et une unité de commande 17 agencée pour appliquer une consigne de commande au dispositif de pilotage 16.

Selon le mode de réalisation représenté sur la figure 1, le dispositif de pilotage 16 est hydraulique et formé par un régulateur de débit à commande proportionnelle 18 monté sur le circuit d'alimentation haute pression 9 en aval d'une pompe d'alimentation 19 disposée sur l'engin porteur 3.

Le régulateur de débit 18 comprend un organe de pilotage 20 déplaçable entre une première position de pilotage correspondant à un débit d'alimentation maximal de l'appareil à percussions 2 et une deuxième position de pilotage correspondant à un débit d'alimentation minimal de l'appareil à percussions 2. Le régulateur de débit 18 comprend en outre une bobine d'actionnement 21 agencée pour recevoir la consigne de commande provenant de l'unité de commande 17, et pour déplacer l'organe de pilotage 20 entre ses première et deuxième positions de pilotage en fonction de la consigne de commande reçue.

L'ensemble comprend en outre une ligne de retour 22 reliée fluidiquement d'une part à un réservoir basse pression 23 et d'autre part au régulateur de débit 18. La ligne de retour 22 et les portions amont et aval du circuit d'alimentation haute pression 9 débouchent avantageusement dans un cylindre (non représenté sur les figures) dans lequel est monté coulissant l'organe de pilotage 20.

Le régulateur de débit 18 est plus particulièrement agencé pour dévier vers la ligne de retour 22, une partie plus ou moins importante du débit de fluide fourni par la pompe d'alimentation 19 en fonction de la position de l'organe de pilotage 20, et donc de la consigne de commande appliquée à la bobine d'actionnement 21 par l'unité de commande 17.

L'unité de commande 17 est agencée pour :
- recevoir les données sonores transmises par l'émetteur 15.
- comparer les données sonores reçues avec une valeur de seuil prédéterminée,
- corriger la consigne de commande du dispositif de pilotage 16 en fonction des données sonores reçues, et
- appliquer la consigne de commande corrigée au dispositif de pilotage 16 de manière à régler le débit d'alimentation de l'appareil à percussions 2.

L'unité de commande 17 est plus particulièrement agencée pour :
- corriger la consigne de commande du dispositif de pilotage 16 de manière à diminuer le débit d'alimentation de l'appareil à percussions 2 lorsque les données sonores reçues par l'unité de commande 17 sont supérieures à la valeur de seuil prédéterminée, et
- corriger la consigne de commande du dispositif de pilotage 16 de manière à augmenter le débit d'alimentation de l'appareil à percussions 2 lorsque les données sonores reçues par l'unité de commande 17 sont inférieures à la valeur de seuil prédéterminée.

Ainsi, lorsque l'appareil à percussion 2 est en fonctionnement, les valeurs des niveaux sonores, ou le maximum de ces valeurs de niveaux sonores, des ondes sonores 14 générées par l'appareil à percussions 2 et se propageant à proximité de la zone 13 sont mesurées par les microphones 12 et sont transmises par l'émetteur 15 à l'unité de commande 17. Ces valeurs sont alors comparées à la valeur de seuil prédéterminée. Lorsque ces valeurs dépassent la valeur de seuil prédéterminée, alors l'unité de commande 17 applique une consigne de commande au dispositif de pilotage 16 de manière à diminuer le débit d'alimentation de l'appareil à percussions 2, et donc la puissance de l'appareil à percussions, et ce afin de limiter les nuisances sonores engendrées par l'appareil à percussions. Au contraire, lorsque ces valeurs sont inférieures à la valeur de seuil prédéterminée, alors l'unité de commande 17 applique une consigne de commande au dispositif de pilotage 16 de manière à augmenter le débit d'alimentation de l'appareil à percussions 2 de manière à augmenter la puissance de l'appareil à percussions, et ce afin d'optimiser le fonctionnement de l'appareil à percussions 2 sans pour autant dépasser les valeurs sonores maximales autorisées dans la zone sensible à protéger.

Selon le mode de réalisation représenté sur la figure 1, l'ensemble comprend également un pressostat 24 agencé pour mesurer la pression dans le circuit d'alimentation haute pression 9. Le pressostat 24 est avantageusement relié à l'unité de commande 17 de manière à transmettre à cette dernière les valeurs de pression mesurées.

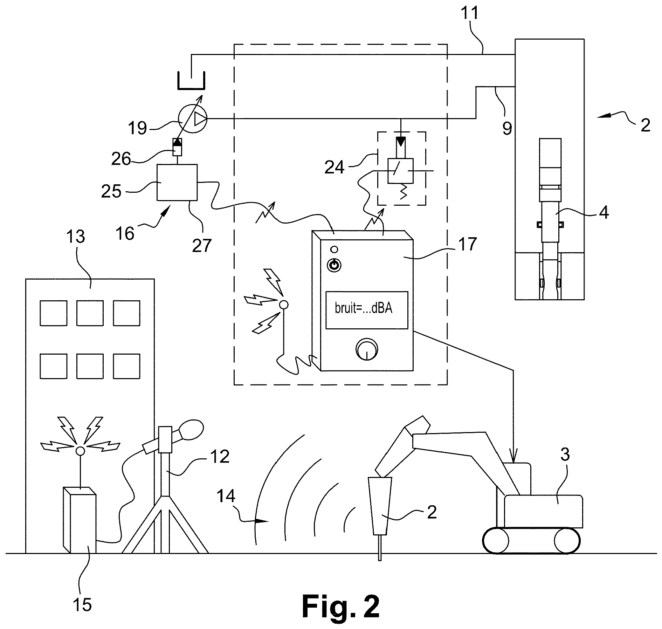

La figure 2 représente un ensemble selon un deuxième mode de réalisation de l'invention qui diffère de l'ensemble représenté sur la figure 1 essentiellement en ce que la pompe d'alimentation 19 est une pompe à cylindrée variable, et en ce que le dispositif de pilotage 16 est formé par un dispositif de contrôle 25 agencé pour régler la cylindrée de la pompe d'alimentation 19 entre une cylindrée minimale et une cylindrée maximale. Le dispositif de contrôle 25 est ainsi agencé pour régler, via la pompe d'alimentation 19, le débit d'alimentation de l'appareil à percussions 2 entre un débit d'alimentation minimal et un débit d'alimentation maximal.

Le dispositif de contrôle 25 comprend un organe de pilotage 26, tel qu'un actionneur, agencé pour coopérer avec la pompe d'alimentation 19 et déplaçable entre une première position de pilotage correspondant à un débit d'alimentation maximal de l'appareil à percussions 2 et une deuxième position de pilotage correspondant à un débit d'alimentation minimal de l'appareil à percussions 2.

Le dispositif de contrôle 25 comprend en outre une unité de contrôle 27 agencée pour recevoir la consigne de commande provenant de l'unité de commande 17, et pour déplacer l'organe de pilotage 26 entre ses première et deuxième positions de pilotage en fonction de la consigne de commande reçue.

Selon ce mode de réalisation de l'invention, l'unité de commande 17 est agencée pour :
- corriger la consigne de commande du dispositif de pilotage 16 de manière à diminuer la cylindrée de la pompe d'alimentation 19, et donc le débit d'alimentation de l'appareil à percussions 2, lorsque les données sonores reçues par l'unité de commande 17 sont supérieures à la valeur de seuil prédéterminée, et
- corriger la consigne de commande du dispositif de pilotage 16 de manière à augmenter la cylindrée de la pompe d'alimentation 19, et donc le débit d'alimentation de l'appareil à percussions 2, lorsque les données sonores reçues par l'unité de commande 17 sont inférieures à la valeur de seuil prédéterminée.

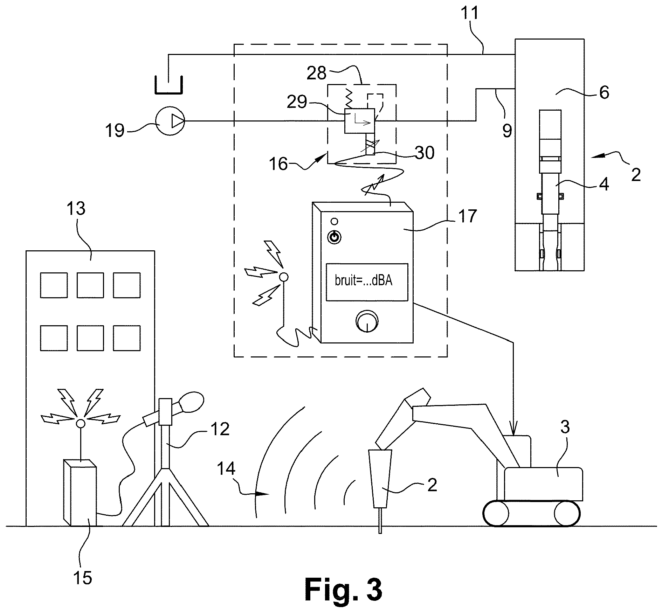

La figure 3 représente un ensemble selon un troisième mode de réalisation de l'invention qui diffère de l'ensemble représenté sur la figure 1 essentiellement en ce que le dispositif de pilotage 16 est formé par un régulateur de pression à commande proportionnelle 28 montée sur le circuit d'alimentation haute pression 9, et agencée pour régler la pression d'alimentation de l'appareil à percussions 2 entre une pression d'alimentation minimale et une pression d'alimentation maximale.

Le régulateur de pression 28 comprend un organe de pilotage 29 déplaçable entre une première position de pilotage correspondant à la pression d'alimentation maximale de l'appareil à percussions 2 et une deuxième position de pilotage correspondant à la pression d'alimentation minimale de l'appareil à percussions 2. Le régulateur de pression 28 comprend en outre une bobine d'actionnement 30 agencée pour recevoir la consigne de commande provenant de l'unité de commande 17, et pour déplacer l'organe de pilotage 29 entre ses première et deuxième positions de pilotage en fonction de la consigne de commande reçue.

Selon ce mode de réalisation de l'invention, l'unité de commande 17 est agencée pour :
- corriger la consigne de commande du dispositif de pilotage 16 de manière à diminuer la pression d'alimentation de l'appareil à percussions 2 lorsque les données sonores reçues par l'unité de commande 17 sont supérieures à la valeur de seuil prédéterminée, et
- corriger la consigne de commande du dispositif de pilotage 16 de manière à augmenter la pression d'alimentation de l'appareil à percussions 2 lorsque les données sonores reçues par l'unité de commande 17 sont inférieures à la valeur de seuil prédéterminée.

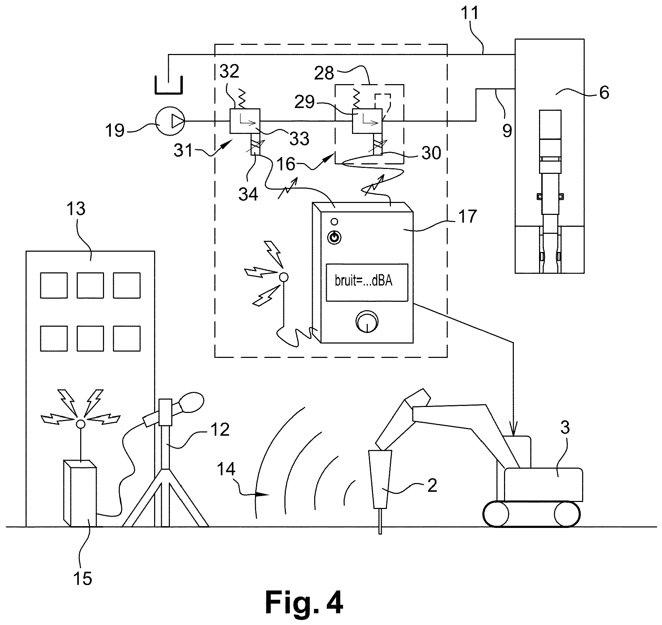

La figure 4 représente un ensemble selon un quatrième mode de réalisation de l'invention qui diffère de l'ensemble représenté sur la figure 3 essentiellement en ce que l'unité de commande 17 est agencée pour commander l'interruption de l'alimentation de l'appareil à percussions 2 en fluide incompressible sous pression lorsque les données sonores reçues par l'unité de commande 17 sont supérieures à la valeur de seuil prédéterminée et lorsque simultanément la pression d'alimentation de l'appareil à percussions 2 est réglée à son minimum par le dispositif de pilotage 16.

Selon le mode de réalisation représenté sur la figure 4, l'ensemble comprend un dispositif d'obturation 31 monté sur le circuit d'alimentation haute pression 9, et agencé pour obturer le circuit d'alimentation haute pression 9. Le dispositif d'obturation 31 est par exemple disposé entre la pompe d'alimentation 19 et le dispositif de pilotage 16.

Le dispositif d'obturation 31 est avantageusement formé par une électrovanne 32, et par exemple une électrovanne tout ou rien, telle qu'une électrovanne normalement ouverte, ou une électrovanne normalement fermée.

L'électrovanne 32 comprend avantageusement un organe d'obturation 33 déplaçable entre une position d'obturation dans laquelle l'organe d'obturation 33 obture le circuit d'alimentation haute pression 9, et une position de libération dans laquelle l'organe d'obturation 33 libère le circuit d'alimentation haute pression 9. L'électrovanne 32 comprend en outre une bobine d'actionnement 34 agencée pour recevoir une consigne de contrôle provenant de l'unité de commande 17, et pour déplacer l'organe d'obturation 33 entre ses positions d'obturation et de libération en fonction de la consigne de contrôle reçue.

Ainsi, lorsque la pression d'alimentation de l'appareil à percussions est réglée à son minimum par le dispositif de pilotage 16, et lorsque simultanément les données sonores reçues par l'unité de commande 17 sont supérieures à la valeur de seuil prédéterminée, l'unité de commande 17 applique une consigne de contrôle à l'électrovanne 32, et plus particulièrement à sa bobine d'actionnement 34 de manière à commander un déplacement de l'organe d'obturation 33 vers sa position d'obturation. Ces dispositions permettent d'interrompre automatiquement l'alimentation en fluide incompressible sous pression de l'appareil à percussions 2, et donc de protéger la zone 13 des ondes sonores produites par l'appareil à percussions 2.

Selon une variante de réalisation de l'invention, le dispositif d'obturation 31 pourrait être intégré aux ensembles selon l'invention représentés sur les figures 1 et 2. Dans ce cas, l'unité de commande 17 serait agencée pour commander l'interruption de l'alimentation de l'appareil à percussions 2 en fluide incompressible sous pression lorsque les données sonores reçues par l'unité de commande 17 sont supérieures à la valeur de seuil prédéterminée et lorsque simultanément le débit d'alimentation de l'appareil à percussions 2 est réglé à son minimum par le dispositif de pilotage 16.

Comme il va de soi, l'invention ne se limite pas aux seules formes d'exécution de cet ensemble, décrites ci-dessus à titre d'exemples, elle en embrasse au contraire toutes les variantes de réalisation.

## Revendications

1. Procédé de commande d'un paramètre d'alimentation d'un appareil à percussions (2) mû par un fluide incompressible sous pression, **caractérisé en ce qu'**il comprend les étapes suivantes :
- prévoir un dispositif de pilotage (16) agencé pour régler un paramètre d'alimentation de l'appareil à percussions,
- prévoir une unité de commande (17) agencée pour appliquer une consigne de commande au dispositif de pilotage (16),
- mettre en marche l'appareil à percussions (2),
- mesurer au moins une donnée sonore à proximité d'une zone prédéterminée (13) déportée par rapport à l'appareil à percussions,
- transmettre l'au moins une donnée sonore mesurée à l'unité de commande (17),
- comparer l'au moins une donnée sonore reçue par l'unité de commande (17) avec une valeur de seuil prédéterminée,
- corriger la consigne de commande du dispositif de pilotage (16) en fonction de l'au moins une donnée sonore reçue,
- appliquer, au moyen de l'unité de commande (17), ladite consigne de commande corrigée au dispositif de pilotage (16) de manière à régler le paramètre d'alimentation de l'appareil à percussions en fonction des données sonores mesurées, l'étape de correction consistant à corriger la consigne de commande de telle sorte que le paramètre d'alimentation réglé par le dispositif de pilotage induise des données sonores inférieures à la valeur de seuil prédéterminée, et
- interrompre l'alimentation de l'appareil à percussions (2) en fluide incompressible sous pression lorsque l'au moins une donnée sonore reçue par l'unité de commande (17) est supérieure à la valeur de seuil prédéterminée et lorsque simultanément le paramètre d'alimentation de l'appareil à percussions est réglé à son minimum par le dispositif de pilotage (16).

2. Procédé de commande selon la revendication 1, dans lequel :
- si l'au moins une donnée sonore reçue est supérieure à la valeur de seuil prédéterminée, l'étape de correction consiste à corriger la consigne de commande du dispositif de pilotage (16) de manière à diminuer le paramètre d'alimentation de l'appareil à percussions.

3. Procédé de commande selon la revendication 1 ou 2, dans lequel :
- si l'au moins une donnée sonore reçue est inférieure à la valeur de seuil prédéterminée, l'étape de correction consiste à corriger la consigne de commande du dispositif de pilotage (16) de manière à augmenter le paramètre d'alimentation de l'appareil à percussions.

4. Procédé de commande selon l'une des revendications 1 à 3, lequel comprend une étape consistant à déplacer un organe de pilotage (20, 20') que comporte le dispositif de pilotage (16) entre une première position de pilotage correspondant à une valeur maximale du paramètre d'alimentation de l'appareil à percussions et une deuxième position de pilotage correspondant à une valeur minimale du paramètre d'alimentation de l'appareil à percussions.

5. Procédé de commande selon l'une des revendications 1 à 4, lequel comprend une étape consistant à répéter de manière itérative les étapes de mesure, de transmission, de comparaison, de correction et d'application.

6. Procédé de commande selon l'une des revendications 1 à 5, dans lequel la zone prédéterminée (13) est une zone habitée ou occupée par des tiers.

7. Ensemble comprenant :
- un appareil à percussions (2) mû par un fluide incompressible sous pression, comportant un piston de frappe (4) agencé pour percuter un outil (7) au cours de chaque cycle de fonctionnement de l'appareil à percussions,
- un dispositif de pilotage (16) agencé pour régler un paramètre d'alimentation de l'appareil à percussions,
- une unité de commande (17) agencée pour appliquer une consigne de commande au dispositif de pilotage (16),
- des moyens de mesure de données sonores (12) destinés à être disposés à proximité d'une zone prédéterminée (13) déportée par rapport à l'appareil à percussions,
- des moyens de transmission (15) reliés aux moyens de mesure de données sonores, et agencés pour transmettre les données sonores mesurées par les moyens de mesure,
l'unité de commande (17) étant agencée pour :
- recevoir les données sonores transmises par les moyens de transmission (15),
- comparer les données sonores reçues avec une valeur de seuil prédéterminée,
- corriger la consigne de commande du dispositif de pilotage (16) en fonction des données sonores reçues, et
- appliquer ladite consigne de commande corrigée au dispositif de pilotage (16) de manière à régler le paramètre d'alimentation de l'appareil à percussions en fonction des données sonores mesurées, l'unité de commande (17) étant agencée pour corriger la consigne de commande de telle sorte que le paramètre d'alimentation réglé par le dispositif de pilotage induise des données sonores inférieures à la valeur de seuil prédéterminée, et
- interrompre l'alimentation de l'appareil à percussions (2) en fluide incompressible sous pression lorsque les données sonores reçues par l'unité de commande (17) sont supérieures à la valeur de seuil prédéterminée et lorsque simultanément le paramètre d'alimentation de l'appareil à percussions est réglé à son minimum par le dispositif de pilotage (16).

8. Ensemble selon la revendication 7, dans lequel, lorsque les données sonores reçues par l'unité de commande (17) sont supérieures à la valeur de seuil prédéterminée, l'unité de commande est agencée pour corriger la consigne de commande du dispositif de pilotage (16) de manière à diminuer le paramètre d'alimentation de l'appareil à percussions.

9. Ensemble selon la revendication 7 ou 8, dans lequel, lorsque les données sonores reçues par l'unité de commande (17) sont inférieures à la valeur de seuil prédéterminée, l'unité de commande (17) est agencée pour corriger la consigne de commande du dispositif de pilotage (16) de manière à augmenter le paramètre d'alimentation de l'appareil à percussions.

10. Ensemble selon l'une des revendications 7 à 9, dans lequel le dispositif de pilotage (16) comprend un organe de pilotage (20, 26, 29) déplaçable entre une première position de pilotage correspondant à une valeur maximale du paramètre d'alimentation et une deuxième position de pilotage correspondant à une valeur minimale du paramètre d'alimentation.

11. Ensemble selon l'une des revendications 7 à 10, dans lequel le dispositif de pilotage (16) est agencé pour régler le débit d'alimentation de l'appareil à percussions entre un débit d'alimentation minimal et un débit d'alimentation maximal.

12. Ensemble selon l'une des revendications 7 à 10, dans lequel le dispositif de pilotage (16) est agencé pour régler la pression d'alimentation de l'appareil à percussions (2) entre une pression d'alimentation minimale et une pression d'alimentation maximale.

## Patentansprüche

1. Steuerverfahren eines Versorgungsparameters eines Schlaggeräts (2), das durch ein nicht komprimierbares Fluid unter Druck angetrieben wird, **dadurch gekennzeichnet, dass** es die folgenden Schritte umfasst:
- Vorsehen einer Leitvorrichtung (16), die eingerichtet ist, um einen Versorgungsparameter des Schlaggeräts einzustellen,
- Vorsehen einer Steuereinheit (17), die eingerichtet ist, um einen Steuersollwert auf die Leitvorrichtung (16) anzuwenden,
- Inbetriebnahme des Schlaggeräts (2),
- Messen mindestens einer Schallinformation in der Nähe einer vorbestimmten Zone (13), die in Bezug zu dem Schlaggerät verlagert ist,
- Übertragen der mindestens einer gemessenen Schallinformation zu der Steuereinheit (17),
- Vergleichen der mindestens einen Schallinformation, die von der Steuereinheit (17) empfangen wird, mit einem vorbestimmten Schwellenwert,
- Korrigieren des Steuersollwerts der Leitvorrichtung (16) in Abhängigkeit von der mindestens einen empfangenen Schallinformation,
- mittels der Steuereinheit (17), Anwenden des korrigierten Steuersollwerts auf die Leitvorrichtung (16) derart, dass der Versorgungsparameter des Schlaggeräts in Abhängigkeit von den gemessenen Schalldaten eingestellt wird, wobei der Korrekturschritt darin besteht, den Steuersollwert derart zu korrigieren, dass der von der Leitvorrichtung eingestellte Versorgungsparameter Schalldaten bewirkt, die niedriger sind als der vorbestimmte Schwellenwert, und
- Unterbrechen der Versorgung des Schlaggeräts (2) mit nicht komprimierbarem Fluid unter Druck, wenn die mindestens eine Schallinformation, die von der Steuereinheit (17) empfangen wird, größer ist als der vorbestimmte Schwellenwert, und wenn gleichzeitig der Versorgungsparameter des Schlaggeräts durch die Leitvorrichtung (16) auf sein Minimum eingestellt ist.

2. Steuerverfahren nach Anspruch 1, wobei:
- falls die mindestens eine empfangene Schallinformation größer ist als der vorbestimmte Schwellenwert, der Korrekturschritt darin besteht, den Steuersollwert der Leitvorrichtung (16) derart zu korrigieren, dass der Versorgungsparameter des Schlaggeräts verringert wird.

3. Steuerverfahren nach Anspruch 1 oder 2, wobei:
- falls die mindestens eine empfangene Schallinformation niedriger ist als der vorbestimmte Schwellenwert, der Korrekturschritt darin besteht, den Steuersollwert der Leitvorrichtung (16) derart zu korrigieren, dass der Versorgungsparameter des Schlaggeräts erhöht wird.

4. Steuerverfahren nach einem der Ansprüche 1 bis 3, das einen Schritt umfasst, der darin besteht, ein Leitorgan (20, 20'), das die Leitvorrichtung (16) umfasst, zwischen einer ersten Leitposition, die einem maximalen Wert des Versorgungsparameters des Schlaggeräts entspricht, und einer zweiten Leitposition, die einem Mindestwert des Versorgungsparameters des Schlaggeräts entspricht, zu verlagern.

5. Steuerverfahren nach einem der Ansprüche 1 bis 4, das einen Schritt umfasst, der darin besteht, iterativ die Schritte des Messens, der Übertragens, des Vergleichs, der Korrektur und der Anwendung zu wiederholen.

6. Steuerverfahren nach einem der Ansprüche 1 bis 5, wobei die vorbestimmte Zone (13) eine durch Dritte bewohnte oder belegte Zone ist.

7. Baugruppe, umfassend:
- ein Schlaggerät (2), das durch ein nicht komprimierbares Fluid unter Druck angetrieben wird, das einen Schlagkolben (4) umfasst, der eingerichtet ist, um ein Werkzeug (7) im Laufe jedes Betriebszyklus des Schlaggeräts zu schlagen,
- eine Leitvorrichtung (16), die eingerichtet ist, um einen Versorgungsparameter des Schlaggeräts einzustellen,
- eine Steuereinheit (17), die eingerichtet ist, um einen Steuersollwert auf die Leitvorrichtung (16) anzuwenden,
- Mittel zum Messen von Schalldaten (12), die dazu bestimmt sind, in der Nähe einer vorbestimmten Zone (13), die in Bezug zu dem Schlaggerät verlagert ist, angeordnet zu sein,
- Übertragungsmittel (15), die mit den Mitteln zum Messen von Schalldaten verbunden und eingerichtet sind, um die Schalldaten, die von den Messmitteln gemessen werden, zu übertragen,
wobei die Steuereinheit (17) eingerichtet ist, um:
- die Schalldaten zu empfangen, die von den Übertragungsmitteln (15) übertragen werden,
- die empfangenen Schalldaten mit einem vorbestimmten Schwellenwert zu vergleichen,
- den Steuersollwert der Leitvorrichtung (16) in Abhängigkeit von den empfangenen Schalldaten zu korrigieren, und
- den korrigierten Steuersollwert auf die Leitvorrichtung (16) derart anzuwenden, dass der Versorgungsparameter des Schlaggeräts in Abhängigkeit von den gemessenen Schalldaten eingestellt wird, wobei die Steuereinheit (17) eingerichtet ist, um den Steuersollwert derart zu korrigieren, dass der von der Leitvorrichtung eingestellte Versorgungsparameter Schalldaten bewirkt, die niedriger sind als der vorbestimmte Schwellenwert, und
- die Versorgung des Schlaggeräts (2) mit nicht komprimierbarem Fluid unter Druck zu unterbrechen, wenn die von der Steuereinheit (17) empfangenen Schalldaten größer sind als der vorbestimmte Schwellenwert, und wenn gleichzeitig der Versorgungsparameter des Schlaggeräts durch die Leitvorrichtung (16) auf sein Minimum eingestellt ist.

8. Baugruppe nach Anspruch 7, wobei, wenn die von der Steuereinheit (17) empfangenen Schalldaten größer sind als der vorbestimmte Schwellenwert, die Steuereinheit eingerichtet ist, um den Steuersollwert der Leitvorrichtung (16) derart zu korrigieren, dass der Versorgungsparameter des Schlaggeräts verringert wird.

9. Baugruppe nach Anspruch 7 oder 8, wobei, wenn die von der Steuereinheit (17) empfangenen Schalldaten niedriger sind als der vorbestimmte Schwellenwert, die Steuereinheit (17) eingerichtet ist, um den Steuersollwert der Leitvorrichtung (16) derart zu korrigieren, dass der Versorgungsparameter des Schlaggeräts erhöht wird.

10. Baugruppe nach einem der Ansprüche 7 bis 9, wobei die Leitvorrichtung (16) ein Leitorgan (20, 26, 29) umfasst, das zwischen einer ersten Leitposition, die einem maximalen Wert des Versorgungsparameters entspricht, und einer zweiten Leitposition, die einem Mindestwert des Versorgungsparameters entspricht, verlagerbar ist.

11. Baugruppe nach einem der Ansprüche 7 bis 10, wobei die Leitvorrichtung (16) eingerichtet ist, um den Versorgungsdurchsatz des Schlaggeräts zwischen einem minimalen Versorgungsdurchsatz und einem maximalen Versorgungsdurchsatz einzustellen.

12. Baugruppe nach einem der Ansprüche 7 bis 10, wobei die Leitvorrichtung (16) eingerichtet ist, um den Versorgungsdruck des Schlaggeräts (2) zwischen einem minimalen Versorgungsdruck und einem maximalen Versorgungsdruck einzustellen.

## Claims

1. A control method for controlling a supply parameter of a percussion apparatus (2) actuated by a pressurized incompressible fluid, **characterized in that** it comprises the following steps:
- providing a control device (16) arranged to adjust a supply parameter of the percussion apparatus,
- providing a control unit (17) arranged to apply a control instruction to the control device (16),
- switching on the percussion apparatus (2)
- measuring at least one sound data in the vicinity of a predetermined area (13) which is offset relative to the percussion apparatus,
- transmitting the at least one measured sound data to the control unit (17)
- comparing the at least one sound data received by the control unit (17) with a predetermined threshold value,
- correcting the control instruction of the control device (16) depending on the at least one received sound data, and
- applying, by means of the control unit (17), said corrected control instruction to the control device (16), so as to adjust the supply parameter of the percussion apparatus depending on the measured sound data, the correction step consisting of correcting the control instruction such that the supply parameter adjusted by the control device induces sound data lower than the predetermined threshold value, and
- interrupting the supply of the pressurized incompressible fluid to the percussion apparatus (2) when the at least one sound data received by the control unit (17) is greater than the predetermined threshold value and when simultaneously the supply parameter of the percussion apparatus is adjusted to its minimum by the control device (16).

2. The control method according to claim 1, wherein:
- if the at least one received sound data is greater than the predetermined threshold value, the correction step consists of correcting the control instruction of the control device (16) so as to decrease the supply parameter of the percussion apparatus.

3. The control method according to claim 1 or 2, wherein:
- if at least one received sound data is lower than the predetermined threshold value, the correction step consists of correcting the control instruction of the control device (16) so as to increase the supply parameter of the percussion apparatus.

4. The control method according to any of claims 1 to 3, which comprises a step consisting of moving a control member (20, 20') comprised by the control device (16) between a first control position corresponding to a maximum value of the supply parameter of the percussion apparatus and a second control position corresponding to a minimum value of the supply parameter of the percussion apparatus.

5. The control method according to any of claims 1 to 4, which comprises a step consisting of iteratively repeating the measurement, transmission, comparison, correction and application steps.

6. The control method according to any of claims 1 to 5, wherein the predetermined area (13) is an area inhabited or occupied by third parties.

7. An assembly comprising:
- a percussion apparatus (2) actuated by a pressurized incompressible fluid, including a striking piston (4) arranged to strike a tool (7) during each operating cycle of the percussion apparatus,
- a control device (16) arranged to adjust a supply parameter of the percussion apparatus,
- a control unit (17) arranged to apply a control instruction to the control device (16),
- sound data measuring means (12) intended to be disposed in the vicinity of a predetermined area (13) which is offset relative to the percussion apparatus,
- transmission means (15) connected to the sound data measuring means, and arranged to transmit the sound data measured by the measuring means,
the control unit (17) being arranged to:
- receive the sound data transmitted by the transmission means (15),
- compare the received sound data with a predetermined threshold value,
- correct the control instruction of the control device (16) depending on the received sound data, and
- apply said corrected control instruction to the control device (16) so as to adjust the supply parameter of the percussion apparatus depending on the measured sound data, the control unit (17) being arranged to correct the control instruction such that the supply parameter adjusted by the control device induces sound data lower than the predetermined threshold value, and
- interrupt the supply of the pressurized incompressible fluid to the percussion apparatus (2) when the sound data received by the control unit (17) are greater than the predetermined threshold value and when simultaneously the supply parameter of the percussion apparatus is adjusted to its minimum by the control device (16).

8. The assembly of claim 7, wherein, when the sound data received by the control unit (17) are greater than the predetermined threshold value, the control unit is arranged to correct the control instruction of the control device (16) so as to decrease the supply parameter of the percussion apparatus.

9. The assembly of claim 7 or 8, wherein, when the sound data received by the control unit (17) are lower than the predetermined threshold value, the control unit (17) is arranged to correct the control instruction of the control device (16) so as to increase the supply parameter of the percussion apparatus.

10. The assembly according to any of claims 7 to 9, wherein the control device (16) comprises a control member (20, 26, 29) movable between a first control position corresponding to a maximum value of the supply parameter and a second control position corresponding to a minimum value of the supply parameter.

11. The assembly according to any of claims 7 to 10, wherein the control device (16) is arranged to adjust the supply flow rate of the percussion apparatus between a minimum supply flow rate and a maximum supply flow rate.

12. The assembly according to any of claims 7 to 11, wherein the control device (16) is arranged to adjust the supply pressure of the percussion apparatus (2) between a minimum supply pressure and a maximum supply pressure.
